# EUROPÄISCHE PATENTSCHRIFT

(11) **EP 0 785 371 B1**
(45) Veröffentlichungstag und Bekanntmachung des Hinweises auf die Patenterteilung: **18.04.2001**
(21) Anmeldenummer: 97100769.5
(22) Anmeldetag: 20.01.1997
(51) Int. Cl.: F16D 55/224

(54) **Bremssattel mit Gehäusehaltefeder**
Brake caliper with caliper retention spring
Etrier de frein avec ressort de maintien d'étrier

(30) Priorität: 20.01.1996 DE 19602058
(43) Veröffentlichungstag der Anmeldung: 23.07.1997
(73) Patentinhaber: Continental Teves AG & Co. oHG, 60488 Frankfurt (DE)
(72) Erfinder: Leidecker, Hans Dieter, 65931 Frankfurt (DE); Musolf, Jürgen, 60323 Frankfurt (DE)
(74) Vertreter: Grau, Ulf

(56) Entgegenhaltungen:
- DE-A- 4 024 484
- DE-A- 4 106 957

## Beschreibung

Die vorliegende Erfindung betrifft eine Bremssattelanordnung für eine Teilbelagscheibenbremse mit einer Gehäusehaltefeder gemäß dem Oberbegriff des Anspruchs 1.

Eine derartige Bremssattelanordnung mit einem Bremsträger und einem Bremssattel ist beispielsweise schon aus der DE 40 24 484 A1 bekannt. Dabei handelt es sich um.einen Schwimmsattel, insbesondere einen Faustsattel für Teilbelagscheibenbremsen mit einer Gehäusehaltefeder, die am Schwimmsattel befestigt ist und diesen gegen den Bremsträger verspannt. Die Befestigung der Gehäusehaltefeder erfolgt zum einen dadurch, daß die freien Enden der Gehäusehaltefeder in Schrägbohrungen eingeführt sind, die an der Stirnseite des Bremssattels angelegt sind, und zum anderen dadurch, daß Vorsprünge vorgesehen sind, an denen die Gehäusehaltefeder einrastet und damit gegen axiale Verschiebungen verriegelt wird.

Die Bohrungen an der Stirnseite des Bremssattels sind deshalb schräg ausgeführt, weil sich dadurch eine selbstverstärkende Wirkung der Befestigung ergibt, wenn auf die eingeführten umgeknickten Enden der Gehäusehaltefeder Kräfte parallel zur Stirnseite des Bremssattels ausgeübt werden.

Derartige Schrägbohrungen entsprechen aber einerseits nicht der Hauptbearbeitungsrichtung, die senkrecht zur Oberfläche verläuft und erfordern zum anderen zumindest bei Aluminiumgehäusen aus Korrosionsschutzgründen eine besondere Beschichtung, damit der Kontakt der Gehäusehaltefeder mit dem Gehäuse vermieden wird.

Die Aufgabe der vorliegenden Erfindung besteht darin, eine Bremssattelanordnung der eingangs genannten Art zu schaffen, der auf preiswerte Weise mit Schrägbohrungen versehen ist und die Enden der Gehäusehaltefedern wirksam vom Material des Bremssattels fernhält.

Diese Aufgabe wird gelöst in Verbindung mit den kennzeichnenden Merkmalen des Anspruchs 1. Das Prinzip der vorliegenden Erfindung besteht also darin, daß in die Stirnseite des Bremssattels Löcher in der Hauptbearbeitungsrichtung geführt sind, nämlich senkrecht zur Oberfläche. In diese Löcher sind dann Stopfen eingesetzt, welche die Schrägbohrungen aufweisen. Die Enden der Gehäusehaltefeder sind also ausschließlich durch den Stopfen und nicht durch das Material des Bremssattels geführt.

Der Stopfen wird vorteilhafter Weise aus Kunststoff gefertigt, da hier mit Sicherheit eine Korrosionsgefahr ausgeschlossen werden kann und weil Kunststoff ein preiswert herzustellendes und zu verarbeitendes Material darstellt.

Weitere vorteilhafte Merkmale ergeben sich aus den weiteren Unteransprüchen.

Eine nähere Erläuterung des Erfindungsgedankens erfolgt nun anhand der Beschreibung mehrerer Ausführungsbeispiele in fünf Figuren. Es zeigt:
- Fig. 1: einen Teilausschnitt aus einem Bremssattel mit Stopfen und eingehängter Gehäusehaltefeder,
- Fig. 2: eine Draufsicht auf einen Stopfen mit einer Anlagefläche für eine gerichtete Montage zur richtigen Orientierung der Schrägbohrung,
- Fig. 3: einen Teilschnitt entlang der Linie III-III durch Fig. 1,
- Fig. 4: eine weitere Draufsicht auf eine alternative Ausführung eines Stopfens mit einer Vorrichtung für gerichteten Einbau und
- Fig. 5: einen Schnitt entlang der Linie V-V in Fig. 4.

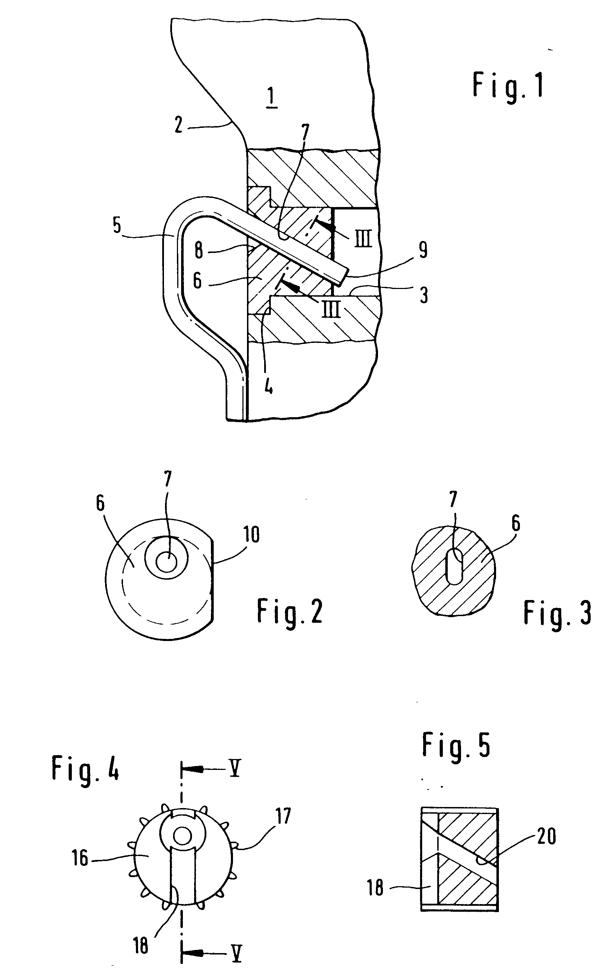

In Fig. 1 ist senlrecht in die Stirnseite 2 eines Bremssattels 1 ein im wesentlichen zylindrisches Loch 3 geführt, welches eine stufige Erweiterung 4 zur Oberfläche hin aufweist. Das Loch ist eine Bohrung mit im Vergleich zum Durchmesser einer Gehäusehaltefeder 5 großem Durchmesser, wobei in das Loch 3 ein Stopfen 6 angepaßter Form eingeführt ist. In den Stopfen 6 ist eine Schrägbohrung 7 geführt, welche zur Stirnseite 2 hin eine trichterförmige Erweiterung 8 zur besseren Einfädelung des Endes 9 der Gehäusehaltefeder 5 aufweist.

Fig. 2 zeigt einen Stopfen 6, wie er in Fig. 1 Verwendung finden könnte. In dieser Draufsicht ist erkennbar, daß der ansonsten rotationssymmetrische Stopfen 6 an einer Seite seiner stufigen Erweiterung eine Abflachung 10 aufweist, die bei entsprechender Formgebung der stufigen Erweiterung 4 des Loches 3 einen Einbau nur in einer Orientierung erlaubt. Dies sichert von vornherein die richtige Führung der Schrägbohrung 7.

Um einen gerichteten Einbau zu ermöglichen, ist es aber auch möglich, die Schrägbohrung 7 mit einem ovalen Querschnitt gemäß Fig. 3 auszustatten. Der Stopfen 6 kann dann entweder zusammen mit der Gehäusehaltefeder 5 in den Bremssattel 1 eingeführt werden, oder es kann ein entsprechendes Einbauwerkzeug in die Schrägbohrung 7 eingeführt werden, welches später entfernt wird.

In Fig. 4 sind zwei verschiedene Merkmale dargestellt, die unabhängig voneinander Verwendung finden können. Zum einen ist der Stopfen 16, welcher in diesem Falle keine stufige Erweiterung trägt und somit keine durch seine Form bedingte Axialsicherung beim Einführen in den Bremssattel gewährleistet, mit an seinem Umfang verteilten, axial verlaufenden Rippen 17 versehen, die beim Einführen in das Loch 3 verformt werden und somit eine Hülsenpressung ergeben. Ohne stufige Erweiterung des Stopfens muß das verwendete Einbauwerkzeug mit einem Anschlag zur Begrenzung der Einbautiefe versehen sein.

Die Rippen 17 sind selbstverständlich auch auf einen der Stopfen gemäß den Fig. 1 bis 3 anwendbar.

Zum anderen weist der Stopfen 16 gemäß Fig. 4 einen Montageschlitz 18 auf, der für den gerichteten Einbau des Stopfens 16 mittels eines Einbauwerkzeuges vorgesehen ist.

Fig. 5 zeigt einen Schnitt durch den Stopfen gemäß Fig. 4, aus welchem hervorgeht, daß die Schrägbohrung 20 in den Montageschlitz 18 mündet.

Nicht dargestellt ist die Möglichkeit, den Bremssattel schon beim Guß mit einer Ausnehmung zu versehen, die später zur Axialsicherung eines Stopfens dient. Dabei ist es nicht unbedingt notwendig, daß der Kopf des Stopfens die gesamte Ausnehmung ausfüllt. Er muß lediglich dicker sein als die Fortsetzung des Loches durch den Bremssattel.

Alle dargestellten Ausführungsbeispiele vereinigen in sich die beide Vorteile, daß das in den Bremssattel geführte Loch in Hauptbearbeitungsrichtung, also senkrecht zur Oberfläche verläuft und daß eine zusätzliche Beschichtung der Schrägbohrung überflüssig ist.

## Patentansprüche

1. Bremssattelanordnung für eine Teilbelagscheibenbremse mit einem Bremsträger und mit einem Bremssattel (1), der am Bremsträger axial verschiebbar gelagert ist und mittels einer Gehäusehaltefeder (5) gegen den Bremsträger verspannt ist, wobei die Gehäusehaltefeder (5) zwei Enden (9) aufweist, die in zwei Schrägbohrungen (7,20) eingehakt sind, welche sich an einer Stirnfläche (2) des Bremssattels (1) befinden, dadurch **gekennzeichnet,** daß die Stirnfläche (2) zwei Löcher (3) aufweist, die senkrecht in die Stirnfläche (2) hineingeführt sind und die mit je einem Stopfen (6,16) verschlossen sind, der eine der Schrägbohrungen (7,20) aufweist.

2. Bremssattelanordnung nach Anspruch 1, dadurch **gekennzeichnet,** daß die Stopfen (6,16) aus Kunststoff bestehen.

3. Bremssattelanordnung nach Anspruch 1 oder 2, dadurch **gekennzeichnet,** daß die Stopfen (6,16) und die Löcher (7,20) durch ihre Formgebung nur je eine bestimmte Orientierung der Schrägbohrungen (7,20) zulassen.

4. Bremssattelanordnung nach Anspruch 1 oder 2, dadurch **gekennzeichnet,** daß die Stopfen mit Vorsprüngen oder Ausnehmungen (18) für einen gerichteten Einbau versehen sind.

5. Bremssattelanordnung nach Anspruch 3 oder 4, dadurch **gekennzeichnet,** daß der Stopfen (6) einen im wesentlichen zylindrischen Schaft und einen verdickten Kopf aufweist.

6. Bremssattelanordnung nach Anspruch 5, dadurch **gekenn zeichnet,** daß zumindest der Bereich (4) des Stopfenkopfes in den Löchern (3) schon beim Guß des Bremssattels
(1) von Material frei bleibt.

7. Bremssattelanordnung nach einem der vorhergehenden Ansprüche, dadurch **gekennzeichnet,** daß die Stopfen vor Einführung in die Löcher (3) mit Nasen oder Rippen (17) an ihrem Umfang versehen sind, die bei Einführung in die Löcher (3) deformiert werden.

## Claims

1. Brake caliper assembly for a spot-type disc brake which includes a brake carrier and a brake caliper (1) that is axially slidably mounted on the brake carrier and is clamped vis-à-vis the brake carrier by means of a housing holding spring (5), the said housing holding spring (5) including two ends (9) which are hooked into two transverse bores (7, 20) disposed at an end face (2) of the brake caliper (1),
**characterized** in that the end face (2) includes two holes (3) which extend vertically into the end face (2) and are closed with one plug (6, 16) each that includes one of the transverse bores (7, 20).

2. Brake caliper assembly as claimed in claim 1,
**characterized** in that the plugs (6, 16) are made of plastic.

3. Brake caliper assembly as claimed in claim 1 or 2,
**characterized** in that the plugs (6, 16) and the holes (7, 20), due to the way they are shaped, permit in each case only one defined orientation of the transverse bores (7, 20).

4. Brake caliper assembly as claimed in claim 1 or 2,
**characterized** in that the plugs are furnished with projections or recesses (18) for a specifically aligned installation.

5. Brake caliper assembly as claimed in claim 3 or 4,
**characterized** in that the plug (6) has a generally cylindrical stem and an enlarged head.

6. Brake caliper assembly as claimed in claim 5,
**characterized** in that at least the area (4) of the plug head in the holes (3) remains clear of material already during casting of the brake caliper (1).

7. Brake caliper assembly as claimed in anyone of the preceding claims,
**characterized** in that prior to their insertion into the holes (3), the plugs are furnished at their periphery with noses or ribs (17) which are deformed during insertion into the holes (3).

## Revendications

1. Ensemble de disque à frein pour un frein à disque à pince comportant un support de frein et une disque à frein (1) montée sur le support de frein de manière axialement décalable et serré vers le support de frein par l'intermédiaire d'un ressort (5) tenant le boîtier, le ressort (5) comportant deux extrémités (9) accrochées dans deux alésages obliques (7, 20) se trouvant sur la surface (2) de la disque à frein (1), caractérisé en ce que la surface (2) comporte deux trous (3) introduits verticalement dans la surface (2) et fermés chaque fois par un bouchon (6,16) comportant l'un des alésages obliques.

2. Ensemble selon la revendication 1, caractérisé en ce que les bouchons (6, 16) sont formés de matière artificielle.

3. Ensemble selon les revendications 1 ou 2, caractérisé en ce que les bouchons (6, 16) et les trous (7, 20) grâce à leur façonnage chaque fois permettent seulement une certaine orientation des alésages obliques (7,20).

4. Ensemble selon les revendications 1 ou 2, caractérisé en ce que les bouchons sont prévus de saillies ou gorges (18) pour l'installation orientées.

5. Ensemble selon les revendications 3 ou 4, caractérisé en ce que le bouchon (6) comporte une tige sous forme essentiellement cylindrique, et une tête épaissie.

6. Ensemble selon la revendication 5, caractérisé en ce qu'au moins la zone (4) de la tête de bouchon dans les trous (3) est déjà exempt de matière dans le moulage de la disque à frein (1).

7. Ensemble selon l'une des revendications précédentes, caractérisé en ce que les bouchons avant l'introduction dans les trous (3) sont prévus de nez ou ailettes (17) le long de leur périphérie qui sont déformées en l'introduction dans les trous (3).
